# EUROPEAN PATENT APPLICATION

(11) **EP 4 663 861 A1**
(43) Date of publication of application: **17.12.2025**
(21) Application number: 25180232.8
(22) Date of filing: 02.06.2025
(51) Int. Cl.: E03F 5/14

(54) **A STORM WATER FILTER**

(30) Priority: 13.06.2024 SE 2450651
(71) Applicant: Aksidron AB, 139 56 Värmdö (SE)
(72) Inventor: Fagerdahlen, Alexander, 139 56 Värmdö (SE)
(74) Representative: AWA Sweden AB

(57) **Abstract**

Storm water (2) often carries debris, such as leaves, pine needles, foliage and other materials. A filter (1) for storm water (2) is herein provided. The filter (1) comprises a reservoir (3) configured to accumulate storm water (2), a reservoir first filtering medium (8), a reservoir inlet (13), a reservoir outlet (14) and a pipe (15). The storm water (2) accumulated in the reservoir (3) has a storm water surface (6) at a storm water level (7), which rises as the storm water (2) is accumulated in the reservoir (3). The reservoir first filtering medium (8) is arranged inside the reservoir (3) and separates the reservoir (3) into a first portion (11) and a second portion (12). The reservoir inlet (13) is arranged in the first portion (11) of the reservoir (3). The reservoir outlet (14) is arranged in the second portion (12) of the reservoir (3). The pipe (15) comprises a first pipe inlet (16), a second pipe inlet (18) and a pipe outlet (14). The pipe outlet (14) is the reservoir outlet (14). The pipe (15) is configured to transfer storm water (2), filtered by the reservoir first filtering medium (8), from the second portion (12) of the reservoir (3) to the reservoir outlet (14). A major fraction of debris passing from the first portion (11) of the reservoir (3) to the second portion (12) of the reservoir (3) does not exit the reservoir (3) via the reservoir outlet (14).

## Description

### Technical field

The present invention relates to storm water filters. More specifically, the invention relates to storm water filters for filtering debris, such as leaves or pine needles, from storm water.

### Background

Storm water, also written as stormwater, is water that originates from precipitation, such as heavy rain and meltwater from hail or snow. When it reaches the surface of the Earth, stormwater can infiltrate into the soil and become groundwater. Alternatively, stormwater can accumulate on depressed land surfaces, such as those of lakes, ponds or puddles, evaporate back into the atmosphere, or contribute to surface runoff.

Storm water often carries debris, such as leaves, pine needles, foliage and other materials. This debris can clog drainage systems, leading to flooding and other issues. They can also degrade water quality in water bodies, such as rivers or lakes, affecting both wildlife and human activities.

It is often a requirement that the storm water has to be stored in a storage medium before being conveyed to a drainage system. In such a case, the storm water stored in the storage medium is subsequently pumped from the storage medium to the drainage system via a pump. However, debris present in the storm water often clog the pump, requiring frequent maintenance and replacement.

Storm water filters are commonly used to filter debris from storm water. These filters typically use a mechanical filter, such as a sieve, to separate the debris from the storm water. However, storm water filters often get clogged with debris, thus also requiring frequent maintenance and replacement. Additionally, debris that is small enough to pass through the mechanical filter is often left in the storm water, meaning that the filtration efficiency is poor.

### Summary

Therefore, it is desirable to provide a storm water filter with improved performance.

According to an aspect of the present invention, a filter for storm water is provided. The filter comprises a reservoir, a reservoir first filtering medium, a reservoir inlet, a reservoir outlet and a pipe. The reservoir is configured to accumulate storm water. The reservoir has a reservoir wall and a first side. The storm water accumulated in the reservoir has a storm water surface at a storm water level, wherein the storm water level is measured from the first side of the reservoir to the storm water surface along a reference line perpendicular to the storm water surface. The storm water level rises as the storm water is accumulated in the reservoir.

The reservoir first filtering medium is arranged inside the reservoir and separates the reservoir into a first portion configured to accumulate storm water and a second portion configured to accumulate storm water. The first portion is in fluid connection with the second portion via the reservoir first filtering medium. The reservoir inlet is arranged in the first portion of the reservoir and is configured to let the storm water in the reservoir. The reservoir outlet is arranged in the second portion of the reservoir and is configured to let the storm water out of the reservoir.

The pipe comprises a first pipe inlet, a second pipe inlet and a pipe outlet. The first pipe inlet is arranged in the second portion of the reservoir at a first level perpendicular to the storm water surface, wherein the first level is measured from the first side of the reservoir to the first pipe inlet along said reference line. The second pipe inlet is arranged in the second portion of the reservoir at a second level perpendicular to the storm water surface, wherein the second level is measured from the first side of the reservoir to the second pipe inlet along said reference line. The second level is higher than the first level. The pipe outlet is the reservoir outlet. The pipe is configured to transfer the storm water accumulated in the reservoir from the first pipe inlet to the reservoir outlet when the storm water level rises above a third level perpendicular to the storm water surface. The third level is measured from the first side of the reservoir along said reference line. The third level is higher than the first level and lower than the second level.

The reservoir first filtering medium is configured to filter the storm water surface. The first pipe inlet is configured to be completely submerged below the storm water surface at least when the storm water level rises above the third level.

Arranging the reservoir first filtering medium and the pipe as described above allows for a synergy, between the reservoir first filtering medium and the pipe, which improves the performance of the filter.

Without the pipe, debris carried by the storm water and entering the reservoir via the reservoir inlet, such as leaves, pine needles and foliage, can easily exit the reservoir via the reservoir outlet if they are small enough to pass through the reservoir first filtering medium. On the other hand, without the reservoir first filtering medium, the debris would spread throughout the reservoir, irrespective of their size. In such a case, debris not light enough to float on the surface of the storm water accumulated in the reservoir, and not heavy enough to sink to the first side of the reservoir, can easily enter the first pipe inlet, and eventually exit the reservoir via the reservoir outlet.

In the embodiments of the present invention, instead, debris caught by the reservoir first filtering medium are confined to the first portion of the reservoir. These debris cannot exit the reservoir via the reservoir outlet. Debris passing from the first portion of the reservoir to the second portion of the reservoir are likely to be light enough to float on the surface of the water accumulated in the second portion of the reservoir. A minor fraction of debris floating in the second portion of the reservoir can enter the first pipe inlet only in the unlikely event that the storm water level transitions from below the first level to above the first level. Under normal operating conditions, the storm water level is above the first level. If the storm water level is above the first level, debris floating in the second portion of the reservoir cannot enter the first pipe inlet. Thus, a major fraction of debris passing from the first portion of the reservoir to the second portion of the reservoir does not exit the reservoir via the reservoir outlet. Therefore, the performance of the filter is improved.

As a result of the filtration by the storm water filter herein provided, a given volume of storm water exiting the reservoir from the reservoir outlet has a lower concentration of debris, such as leaves, pine needles, foliage and other materials, as compared to when the same volume of storm water entered the reservoir from the reservoir inlet.

The storm water exiting the reservoir via the reservoir outlet may be accumulated in a storage medium, such as a tank. The storage medium may be connected to a storm water distribution system. Alternatively, the storm water exiting the reservoir via the reservoir outlet may be directly released into a storm water distribution system.

According to one embodiment, the reservoir first filtering medium is arranged perpendicularly to the first side of the reservoir.

According to one embodiment, the reservoir further comprises a reservoir overflow outlet arranged in the second portion of the reservoir at a fourth level perpendicular to the storm water surface. The fourth level is measured from the first side of the reservoir to the reservoir overflow outlet along the reference line mentioned above. The fourth level is higher than the third level and lower than the second level.

The reservoir overflow outlet is useful to prevent the storm water level from reaching the second level. If the flow of storm water entering the reservoir via the reservoir inlet is large enough, the storm water level can rise above the second level, which is higher than the first level. If the storm water level rises above the second level, a portion of the storm water accumulated in the reservoir enters the pipe from the second pipe inlet. In such a case, debris carried by the storm water to the second portion of the reservoir can enter the pipe from the second pipe inlet, and eventually exit the reservoir via the reservoir outlet. The reservoir overflow outlet serves as an additional outlet, as compared to the pipe outlet, for the water accumulated in the reservoir. As a result, it is more difficult for the water accumulated in the reservoir to rise above the second level. Moreover, debris carried by the storm water to the second portion of the reservoir and exiting the reservoir via the reservoir overflow outlet do not contaminate the storm water exiting the reservoir via the reservoir outlet. As a consequence, the filter performance is improved.

The storm water leaving the reservoir via the reservoir overflow outlet may be accumulated in an overflow storage medium, such as an emergency tank. The overflow storage medium may be connected to a storm water overflow distribution system. Alternatively, the storm water exiting the reservoir via the reservoir overflow outlet may be directly released into a storm water overflow distribution system.

According to one embodiment, the filter further comprises a first operating mechanism enabling insertion and removal of the reservoir first filtering medium from the reservoir.

The first operating mechanism facilitates installation, periodic cleaning and replacement of the first filtering medium. As result, the filter performance is improved.

According to one embodiment, the reservoir first filtering medium is a first basket filtering medium configured to directly receive the storm water from the reservoir inlet.

As a result, debris too large to pass through the first basket filtering medium get trapped in the first basket filtering medium. The debris trapped in the first basket filtering medium may be removed from the first basket filtering medium. Thus, the performance of the filter is improved. The first basket filtering medium may be removed from the reservoir, which facilitates removal from the first basket filtering medium of the debris trapped in the first basket filtering medium. Thus, the performance of the filter is further improved. According to one embodiment, the filter further comprises a reservoir second filtering medium arranged in the first portion.

The reservoir second filtering medium is advantageous in that it provides an additional barrier for debris entering the reservoir via the reservoir inlet. As a result, the risk that debris pass from the first portion of the reservoir to the second portion of the reservoir is reduced, thereby improving the filter performance.

According to one embodiment, the reservoir second filtering medium is a second basket filtering medium configured to directly receive the storm water from the reservoir inlet.

As a result, debris too large to pass through the second basket filtering medium get trapped in the second basket filtering medium and cannot reach the reservoir first filtering medium. The debris trapped in the second basket filtering medium may be easily removed from the second basket filtering medium. Thus, the performance of the filter is improved. The second basket filtering medium may be removed from the reservoir, which facilitates removal from the second basket filtering medium of the debris trapped in the second basket filtering medium. Thus, the performance of the filter is further improved.

The filter may further comprise a second operating mechanism enabling insertion and removal of the reservoir second filtering medium from the reservoir.

The second operating mechanism facilitates installation, periodic cleaning and replacement of the second filtering medium. As result, the filter performance is improved.

The reservoir first filtering medium may have a first mesh size, and the reservoir second filtering medium may have a second mesh size.

The first mesh size allows the first filtering medium to catch debris with a size in a first debris size range. The second mesh size allows the second filtering medium to catch debris with a size in a second debris size range. As a result, debris with sizes in two different ranges may be effectively targeted, thereby reducing the risk that debris may pass from the first portion of the reservoir to the second portion of the reservoir. Thus, the filter performance is improved.

According to one embodiment, the pipe comprises a T-junction.

### Brief description of the drawings

The invention is now described, by way of example, with reference to the accompanying drawings.
Fig. 1 shows an embodiment of a filter for storm water, in a cross-sectional view.
Fig. 2 shows another embodiment of a filter for storm water, in a top view.
Fig. 3 shows another embodiment of a filter for storm water, in a top view.

### Detailed description

In the following, a detailed description of embodiments of the invention will be given with reference to the accompanying drawings. It will be appreciated that the drawings are for illustration only and are not in any way restricting the scope of the invention. Thus, any references to directions, such as "up" or "down", are only referring to the directions shown in the figures. It should be noted that the features having the same reference numerals have the same function. A feature in one embodiment could thus be exchanged for a feature from another embodiment having the same reference numeral, unless clearly contradictory.

The mesh size of a sieve is to be understood as the number of openings in one square inch of the sieve. For example, a sieve with a mesh size of 10 has 10 openings in one square inch, while a sieve with a mesh size of 400 has 400 openings in one square inch. Therefore, a higher mesh size means that smaller particles can pass through the sieve, and a lower mesh size means that larger particles can pass through the sieve.

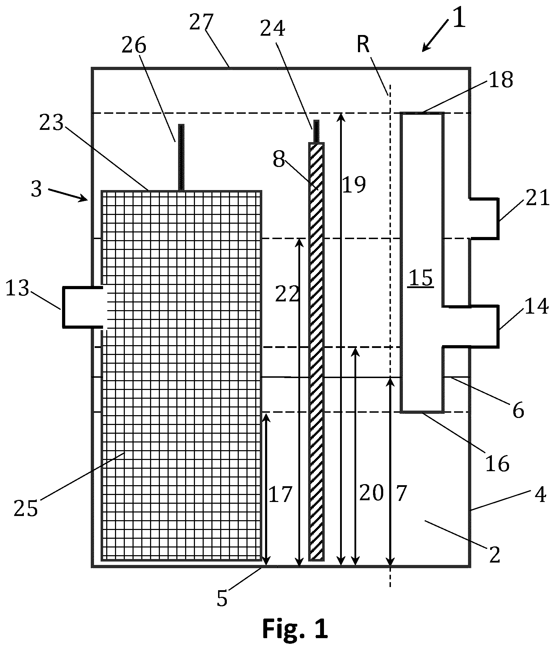

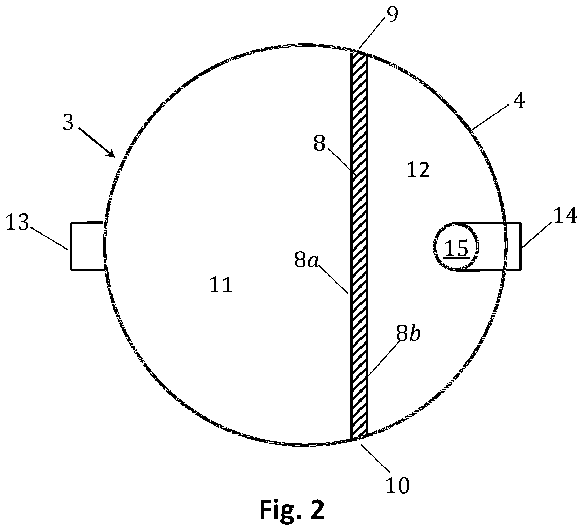

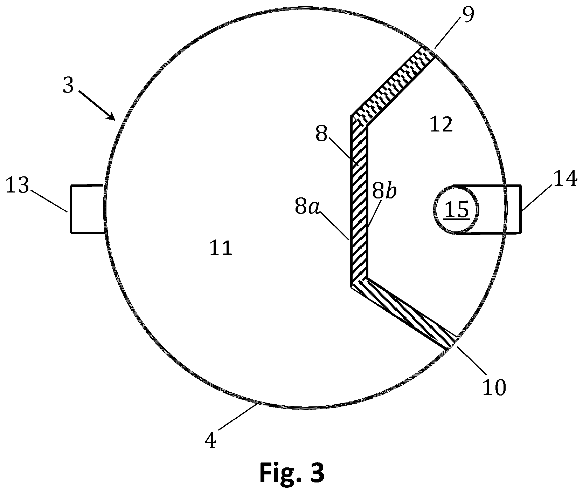

Fig. 1 illustrates a cross-sectional view of a filter 1 for storm water 2 according to an embodiment of the invention. The filter 1 comprises a reservoir 3, a reservoir first filtering medium 8, a reservoir inlet 13, a reservoir outlet 14, a pipe 15 and a reservoir second filtering medium 25. Fig. 2 illustrates a top view of an embodiment similar to that in Fig. 1. The difference is only that the embodiment in Fig. 2 does not comprise the reservoir second filtering medium 25. Fig. 3 illustrates another embodiment similar to that in Fig. 2. The difference is only in the shape of the reservoir first filtering medium 8, as further explained later.

The reservoir 3 is configured to accumulate storm water 2. The reservoir 3 has a reservoir wall 4, a first side 5 and a second side 27. The storm water 2 accumulated in the reservoir 3 has a storm water surface 6 at a storm water level 7. The storm water level 7 is measured from the first side 5 of the reservoir 3 to the storm water surface 6 along a reference line R perpendicular to the storm water surface 6. The storm water level 7 rises as the storm water 2 is accumulated in the reservoir 3.

In the embodiment in Fig. 1, the reservoir 3 is a cylinder. The reservoir wall 4 is a cylindrical surface. The first side 5 is the top base of the cylinder and is arranged perpendicularly to the reservoir wall 4. The second side 27 is the top base of the cylinder and is arranged perpendicularly to the reservoir wall 4. However, other embodiments are conceivable. For instance, at least one of the first side 5 and the second side 27 may not be arranged perpendicularly to the reservoir wall 4.

The second side 27 is configured to be closed and to be opened. Under normal operating conditions, the second side 27 is closed. Therefore, under normal operating conditions, the storm water 2 evaporating into a gaseous state condenses back into a liquid state inside the reservoir 3. In other words, the level of humidity in the reservoir 3 is large enough that, under normal operating conditions, the storm water level 7 is above the first level 17.

The reservoir first filtering medium 8 is arranged inside the reservoir 3. The reservoir first filtering medium 8 comprises a first sieve. The first sieve comprises a first mesh having a first mesh size. In the embodiments in Fig. 1 and Fig. 2, the first mesh size is uniform throughout the first sieve. This means that the number of openings per square inch of the first sieve is the same throughout the first sieve. The first mesh size is designed such that the first sieve is capable of catching debris with a size in a single first debris size range. However, in other embodiments the first mesh size is not uniform throughout the first sieve. As a result, the first sieve is capable of catching debris with sizes in multiple different first debris size ranges.

The reservoir first filtering medium 8 separates the reservoir 3, from a first point 9 (cf. Fig. 2) of the reservoir wall 4 to a second point 10 (cf. Fig. 2) of the reservoir wall 4, into a first portion 11 and a second portion 12. The first portion 11 is in fluid connection with the second portion 12 via the reservoir first filtering medium 8. The first point 9 and the second point 10 are the two points on the reservoir wall 4 that are closest to the reservoir first filtering medium 8.

The reservoir wall 4 comprises a first groove (not shown) arranged perpendicularly to the first side 5 and passing by the first point 9. The reservoir wall 4 further comprises a second groove (not shown) arranged perpendicularly to the first side 5 and passing by the second point 10. The reservoir first filtering medium 8 is configured to slide into the first groove and the second groove. Thus, the reservoir first filtering medium 8 is arranged perpendicularly to the first side 5 of the reservoir 3. The first sieve of the reservoir first filtering medium 8 extends from the first point 9 to the second point 10. This means that no space is left between the first sieve of the reservoir first filtering medium 8 and the reservoir wall 4 at the first point 9. Likewise, no space is left between the first sieve of the reservoir first filtering medium 8 and the reservoir wall 4 at the second point 10. Thus, the reservoir first filtering medium 8 is coupled to the reservoir wall 4 at the first point 9 via the first groove. Likewise, the reservoir first filtering medium 8 is coupled to the reservoir wall 4 at the second point 10 via the second groove.

However, other embodiments are conceivable. In other embodiments, at least one of the first groove and the second groove is not perpendicular to the first side 5. In yet other embodiments, the reservoir first filtering medium 8 is coupled to the reservoir wall 4 via one or more hooks arranged along a first line passing by the first point 9. Likewise, the reservoir first filtering medium 8 is coupled to the reservoir wall 4 via one or more hooks arranged along a second line passing by the second point 10. Thus, there is space left between the first sieve of the reservoir first filtering medium 8 and the reservoir wall 4 at the first point 9. Likewise, there is space left between the first sieve of the reservoir first filtering medium 8 and the reservoir wall 4 at the second point 10.

In yet other embodiments, the reservoir first filtering medium 8 is not coupled to the reservoir wall 4 at one, at least, of the first point 9 and the second point 10. In these embodiments, the reservoir first filtering medium 8 is coupled to at least one of the first side 5 and the second side 27.

As shown in Fig. 2, the reservoir first filtering medium 8 is a screen arranged along a line connecting the first point 9 with the first point 10. However, alternative shapes are conceivable, such as that of the embodiment in Fig. 3.

As shown in Fig. 3, the reservoir first filtering medium 8 is a screen comprising a first section, a second section and a third section. The first section is arranged along a line connecting the first point 9 with the third section. The first section is arranged at a first angle in relation to the third section. The third section is arranged along a line connecting the first section with the second section. The second section is arranged along a line connecting the second point 10 with the third section. The second section is arranged at a second angle in relation to the third section. The first angle is the same as the second angle. However, in other embodiments the first angle is different from the second angle.

Unless indicated otherwise, in any of the embodiments herein provided the first portion 11 and the second portion 12 are defined as follows. One draws a first plane parallel to the section of the reservoir first filtering medium 8 that is closest to the first point 9, the first plane passing by the reservoir wall 4 at the first point 9, and passing by the reservoir first filtering medium 8. The first plane intersects the reservoir wall 4 along a first line passing by the first point 9. One draws a second plane parallel to the section of the reservoir first filtering medium 8 that is closest to the second point 10, the second plane passing by the reservoir wall 4 at the second point 10, and passing by the reservoir first filtering medium 8. The second plane intersects the reservoir wall 4 along a second line passing by the second point 10. The first line and the second line divide the reservoir wall 4 into a first surface, between the first line and the second line, and a second surface. The second surface is complementary to the first surface, meaning that the sum of the first surface and the second surface is equal to the reservoir wall 4. The first portion 11 is the volume, inside the reservoir 3, delimited by the first surface, the first side 5, the second side 27 and the reservoir first filtering medium 8. The second portion 12 is the complementary volume, meaning that the sum of the first portion 11 and the second portion 12 is equal to the volume inside the reservoir 3.

In any of the embodiments herein provided, the first sieve of the reservoir first filtering medium 8 may comprise at least two filtering layers spaced apart from each other. Each filtering layer is a sieve with a respective mesh size. Debris passing through the reservoir first filtering medium 8 will have to subsequently pass through each of the filtering layers of the reservoir first filtering medium 8 in order to move from the first portion 11 to the second portion 12. Preferably, the closer a first filtering layer of the reservoir first filtering medium 8 is to the reservoir inlet 13 as compared to a second filtering layer of the reservoir first filtering medium 8, the lower the mesh size is of the first filtering layer of the reservoir first filtering medium 8 as compared to the mesh size of the second filtering layer of the reservoir first filtering medium 8. However, in other embodiments the first sieve of the reservoir first filtering medium 8 comprises a single filtering layer.

For instance, in the embodiments in Fig. 1, Fig. 2 and Fig. 3 the reservoir first filtering medium 8 comprises a first filtering layer 8a and a second filtering layer 8b (cf. Fig. 2 and Fig. 3). The first filtering layer 8a is closer to the reservoir inlet 13 than the first filtering layer 8b. Debris, in order to pass from the first portion 11 to the second portion 12 through the reservoir first filtering medium 8, need to pass first through the first filtering layer 8a, and then through the second filtering layer 8b. The first filtering layer 8a has a lower mesh size than the second filtering layer 8b.

As shown in Fig. 1 and Fig. 2, the reservoir inlet 13 is arranged in the first portion 11 of the reservoir and is configured to let the storm water 2 in the reservoir 3. The reservoir outlet 14 is arranged in the second portion 12 of the reservoir 3 and is configured to let the storm water 2 out of the reservoir 3. As a result of the filtration achieved by the filter 1, a given volume of storm water 2 exiting the reservoir 3 from the reservoir outlet 14 has a lower concentration of debris, such as leaves, pine needles, foliage and other materials, as compared to when the same volume of storm water 2 entered the reservoir 3 from the reservoir inlet 13.

The pipe 15 comprises a first pipe inlet 16, a second pipe inlet 18 and a pipe outlet 14. The pipe outlet 14 is the reservoir outlet 14.

The first pipe inlet 16 is arranged in the second portion 12 of the reservoir 3 at a first level 17 perpendicular to the storm water surface 6. The first level 17 is measured from the first side 5 of the reservoir 3 to the first pipe inlet 16 along the reference line R.

The second pipe inlet 18 is arranged in the second portion 12 of the reservoir 3 at a second level 19 perpendicular to the storm water surface 6. The second level 19 is measured from the first side 5 of the reservoir 3 to the second pipe inlet 18 along the reference line R. The second level 19 is higher than the first level 17.

The pipe 15 is configured to transfer the storm water 2 accumulated in the reservoir 3 from the first pipe inlet 16 to the reservoir outlet 14 if the storm water level 7 rises above a third level 20 perpendicular to the storm water surface 6. The third level 20 is measured from the first side 5 of the reservoir 3 along the reference line R. The third level 20 is higher than the first level 17 and lower than the second level 19. The second pipe inlet 18 ensures that a negative pressure is maintained in the pipe 15 such that the storm water 2 accumulated in the reservoir 3 flows from the first pipe inlet 16 to the reservoir outlet 14 if the storm water level 7 rises above the third level 20.

In the embodiments in Fig. 1 and Fig. 2, the reservoir outlet 14 is arranged at the third level 20. However, in other embodiments the reservoir outlet 14 is arranged at a different level. For instance, in some embodiments the reservoir outlet 14 is arranged at a level lower than the first level 17.

In the embodiments in Fig. 1 and Fig. 2, the pipe 15 comprises a T-junction. In these embodiments, the pipe 15 comprises a first branch and a second branch, arranged perpendicularly one to each other. The first branch comprises the first pipe inlet 16 and the second pipe inlet 18. The second branch comprises the pipe outlet 14, which is the reservoir outlet 14. Thus, the first branch and the second branch form a T-junction. However, other embodiments are conceivable. For instance, the first branch of the pipe 15 and the second branch of the pipe 15 may be arranged such that the pipe 15 comprises a Y-junction, or a different type of junction.

The reservoir first filtering medium 8 is configured to filter the storm water surface 6 at least when the storm water level 7 rises above the first level 17. As a result, the reservoir first filtering medium 8 is configured to catch debris, with a size in the first debris size range, floating on the storm water surface 6 in the first portion 11 of the reservoir 3. These debris cannot pass through the reservoir first filtering medium 8 from the first portion 11 to the second portion 12 of the reservoir 3.

In the embodiments in Fig. 1 and in Fig. 2, the first sieve of the reservoir first filtering medium 8 is spaced from the first side 5 by a first distance. However, in other embodiments the first sieve of the reservoir first filtering medium 8 extends from the first side 5 such that there is no space left between the first sieve of the reservoir first filtering medium 8 and the first side 5.

The reservoir first filtering medium 8 is configured such that a major fraction of the debris passing through the reservoir first filtering medium 8 from the first portion 11 to the second portion 12 is light enough to float on the storm water surface 6 in the second portion 12.

The first pipe inlet 16 is configured to be completely submerged below the storm water surface 6 if the storm water level 7 rises above the third level 20. As a result, debris floating on the storm water surface 6 in the second portion 12 of the reservoir 3 cannot enter the pipe 15 from the first pipe inlet 16 if the storm water level 7 is above the third level 20. A minor fraction of debris floating in the second portion 12 of the reservoir 3 can enter the first pipe inlet 16, but only when the storm water level 6 transitions from below the first level 17 to above the first level 17. If the storm water level 7 is below the first level 17 or above the first level 17, debris floating in the second portion 12 of the reservoir 3 cannot enter the first pipe inlet 16.

As shown in Fig. 1, the reservoir 3 further comprises a reservoir overflow outlet 21 arranged in the second portion 12 of the reservoir 3 at a fourth level 22 perpendicular to the storm water surface 6. The fourth level 22 is measured from the first side 5 of the reservoir 3 to the reservoir overflow outlet 21 along the reference line R. The fourth level 22 is higher than the third level 20 and lower than the second level 19. The reservoir overflow outlet 21 is configured to let out of the reservoir 3 a portion of the storm water 2 accumulated in the reservoir 3 if the storm water level 7 is above the fourth level 22. If the storm water level 7 is above the fourth level 22, the storm water 2 accumulated in the reservoir 3 exits the reservoir 3, at the same time, both from the reservoir outlet 14 and from the reservoir overflow outlet 21. Debris can be present in the portion of storm water 2 exiting the reservoir 3 from the reservoir overflow outlet 21. In order to prevent these debris from contaminating the portion of storm water 2 exiting the reservoir 3 from the reservoir outlet 14, the filter 1 is configured such that the portion of storm water 2 exiting the reservoir 3 from the reservoir overflow outlet 21 does not mix with the portion of storm water 2 exiting the reservoir 3 from the reservoir outlet 14. The reservoir outlet 14 is in fluid connection with a main storage tank (not shown). The reservoir overflow outlet 21, instead, is in fluid connection with an overflow storage tank (not shown), different from the main storage tank.

Some of the debris in the second portion 12 of the reservoir 3 are heavy enough to sink to the first side 5 of the reservoir 3. These debris cannot enter the pipe 15 neither from the first pipe inlet 16, nor from the second pipe inlet 18.

Some of the debris in the second portion 12 of the reservoir 3 are not heavy enough to sink to the first side 5 of the reservoir 3, but, at the same time, they are not light enough to float on the storm water surface 6 in the second portion 12 of the reservoir 3. These debris can enter the pipe 15 from the first pipe inlet 16 if the storm water level 7 is above the first level 17. In case they do not enter the pipe 15 from the first pipe inlet 16, these debris can enter the pipe 15 from the second pipe inlet 18 if the storm water level 7 is above the second level 18. However, the debris in the second portion 12 of the reservoir 3 which neither float on the storm water 6, nor sink to the first side 5, are a minor fraction of the debris passing through the reservoir first filtering medium 8 from the first portion 11 to the second portion 12.

Thus, a major fraction of the debris passing from the first portion 11 of the reservoir 3 to the second portion 12 of the reservoir 3 is either confined to the second portion 12 of the reservoir, or it exits the reservoir 3 from the reservoir overflow outlet 21. Therefore, a major fraction of the debris passing from the first portion 11 of the reservoir 3 to the second portion 12 of the reservoir 3 does not exit the reservoir via the reservoir outlet 14.

As shown in Fig. 1, the filter 1 comprises a first operating mechanism 24 enabling insertion and removal of the reservoir first filtering medium 8 from the reservoir 3. The first operating mechanism 24 is a handle attached to the reservoir first filtering medium 8. The second side 27 of the reservoir 3 is configured to be closed and to be opened. By opening the second side 27, the reservoir first filtering medium 8 can be subsequently inserted into the reservoir 3, or removed from the reservoir 3, by gripping the handle. Therefore, the first operating mechanism 24 facilitates installation, periodic cleaning and replacement of the first filtering medium 8.

In other embodiments, the first operating mechanism 24 is a first motor. The first motor may be placed, at least partially, outside the reservoir 3. The first motor may be of different types, such as an electrical motor, a mechanical motor or an hydraulic motor. In these embodiments, the first motor is directly or indirectly coupled to the reservoir first filtering medium 8. The first motor is configured to insert or remove the reservoir first filtering medium 8 from the reservoir 3.

For instance, the first motor may comprise a system of pulleys configured to engage with a flexible wire, the flexible wire being connected to the reservoir first filtering medium 8. If the first motor is a mechanical motor, the system of pulleys may be coupled to a handle and the system of pulleys may be operated by manually rotating the handle. By rotating the handle, a force is transmitted to the reservoir first filtering medium 8 through the flexible wire, thereby enabling insertion and removal of the reservoir first filtering medium 8 from the reservoir 3. Alternatively, if the first motor is an electrical motor, the system of pulleys may be operated by activating an electrical mechanism. Alternatively, if the first motor is an hydraulic motor, the system of pulleys may be operated by activating an hydraulic mechanism. However, other embodiments of the first motor are also conceivable.

As mentioned above, the embodiment in Fig. 1 comprises a reservoir second filtering medium 25. The reservoir second filtering medium 25 is arranged in the first portion 11 of the reservoir 3. The reservoir second filtering medium 25 is arranged between the reservoir inlet 13 and the reservoir first filtering medium 8. As a result, debris carried by the storm water 2 entering the reservoir 3 from the reservoir inlet 13 need to pass through the reservoir second filtering medium 25 in order to reach the reservoir first filtering medium 8.

The reservoir second filtering medium 25 comprises a second sieve. The second sieve comprises a second mesh having a second mesh size. In the embodiment in Fig. 1, the second mesh size is uniform throughout the second sieve. This means that the number of openings per square inch of the second sieve is the same throughout the second sieve. The second mesh size is designed such that the second sieve is capable of catching debris with a size in a single second debris size range. However, in other embodiments the second mesh size is not uniform throughout the second sieve. As a result, the second sieve is capable of catching debris with sizes in multiple different second debris size ranges.

In the embodiment in Fig. 1, the second mesh size is lower than the first mesh size. As a result, the second filtering medium 25 is configured to catch debris of larger size, and the first filtering medium 8 is configured to catch debris of smaller size. However, in other embodiments the first mesh size is the same as the second mesh size.

In the embodiment in Fig. 1, the reservoir second filtering medium 25 is a second basket filtering medium configured to directly receive the storm water 2 from the reservoir inlet 13. The second basket filtering medium comprises the second sieve and a second basket filtering medium first aperture. The second basket filtering medium first aperture is configured to be coupled with the reservoir inlet 13. As a result, the storm water 2 entering the reservoir 3 from the reservoir inlet 13 subsequently enters the second basket filtering medium from the second basket filtering medium first aperture, and finally passes through the sieve of the second basket filtering medium. Thus, debris entering the reservoir 3 from the reservoir inlet 13 get trapped in the second basket filtering medium if they are too large to pass through the sieve of the second basket filtering medium. These debris cannot reach the reservoir first filtering medium 8.

As shown in Fig. 1, the filter 1 comprises a second operating mechanism 26 enabling insertion and removal of the reservoir second filtering medium 8 from the reservoir 3. The second operating mechanism 26 is a handle attached to the reservoir second filtering medium 25. The second side 27 of the reservoir 3 is configured to be closed and to be opened. By opening the second side 27, the reservoir second filtering medium 25 can be subsequently inserted into the reservoir 3 or removed from the reservoir 3 by gripping the handle. Therefore, the second operating mechanism 26 facilitates installation, periodic cleaning and replacement of the second filtering medium 25.

In other embodiments, the second operating mechanism 26 is a second motor. The second motor may be placed, at least partially, outside the reservoir 3. The second motor may be of different types, such as an electrical motor, a mechanical motor or an hydraulic motor. In these embodiments, the second motor is directly or indirectly coupled to the reservoir second filtering medium 25. The second motor is configured to insert or remove the reservoir second filtering medium 25 from the reservoir 3.

For instance, the second motor may comprise a system of pulleys configured to engage with a flexible wire, the flexible wire being connected to the reservoir second filtering medium 8. If the second motor is a mechanical motor, the system of pulleys may be coupled to a handle and the system of pulleys may be operated by manually rotating the handle. By rotating the handle, a force is transmitted to the reservoir second filtering medium 25 through the flexible wire, thereby enabling insertion and removal of the reservoir second filtering medium 25 from the reservoir 3. Alternatively, if the second motor is an electrical motor, the system of pulleys may be operated by activating an electrical mechanism. Alternatively, if the second motor is an hydraulic motor, the system of pulleys may be operated by activating an hydraulic mechanism. However, other embodiments of the second motor are also conceivable.

In the embodiment in Fig. 1, the second sieve of the second basket filtering medium 25 comprises a section 23 configured to be opened and to be closed. The debris trapped in the second basket filtering medium 25 may be removed by removing the second basket filtering medium 25 from the reservoir 3 by opening the section 23 of the second basket filtering medium 25.

Alternatively, the second basket filtering medium 25 may not comprise a section 23 configured to be opened and to be closed. In such a case, the second basket filtering medium 25 comprises a second basket filtering medium second aperture arranged above the third level 20. The second basket filtering medium second aperture is open. Debris trapped in the second basket filtering medium 25 may be removed from the second basket filtering medium 25 through the second basket filtering medium second aperture. Arranging the second basket filtering medium second aperture above the third level 20 ensures that debris trapped in the second basket filtering medium 25 are unlikely to escape the second basket filtering medium 25 from the second basket filtering medium second aperture under normal operating conditions. Preferably, the second basket filtering medium second aperture is arranged above the fourth level 22.

In any of the embodiments herein provided, the second sieve of the reservoir second filtering medium 25 may comprise at least two filtering layers spaced apart from each other. Each filtering layer is a sieve with a respective mesh size. Debris passing through the reservoir second filtering medium 25 will have to subsequently pass through each of the filtering layers of the reservoir second filtering medium 25 in order to move from the first portion 11 to the second portion 12. Preferably, the closer a first filtering layer of the reservoir second filtering medium 25 is to the reservoir inlet 13 as compared to a second filtering layer of the reservoir second filtering medium 25, the lower the mesh size is of the first filtering layer of the reservoir second filtering medium 25 as compared to the mesh size of the second filtering layer of the reservoir second filtering medium 25. However, in other embodiments the second sieve of the reservoir second filtering medium 25 comprises a single filtering layer.

Other embodiments are also conceivable. One of these embodiments (not shown), is similar to that shown in Fig. 1, the only difference being that the first filtering medium 8 is a first basket filtering medium configured to directly receive the storm water 2 from the reservoir inlet 13, and that the second reservoir filtering medium 25 and the second operating mechanism 26 are absent. The first basket filtering medium comprises the first sieve and a first basket filtering medium first aperture. The first basket filtering medium first aperture is configured to be coupled with the reservoir inlet 13. As a result, the storm water 2 entering the reservoir 3 from the reservoir inlet 13 subsequently enters the first basket filtering medium from the first basket filtering medium first aperture, and finally passes through the sieve of the first basket filtering medium. Thus, debris entering the reservoir 3 from the reservoir inlet 13 get trapped in the first basket filtering medium if they are too large to pass through the first sieve of the first basket filtering medium.

Similarly to the second basket filtering medium 25 described in other embodiments, in this embodiment the first basket filtering medium comprises a first basket filtering medium second aperture arranged above the third level 20. The first basket filtering medium second aperture is open. Debris trapped in the first basket filtering medium may be removed from the first basket filtering medium 25 through the first basket filtering medium second aperture. Arranging the first basket filtering medium second aperture above the third level 20 ensures that debris trapped in the first basket filtering medium are unlikely to escape the first basket filtering medium from the first basket filtering medium second aperture under normal operating conditions. Preferably, the first basket filtering medium second aperture is arranged above the fourth level 22.

In this embodiment, the first portion 11 of the reservoir 3 is the minimum volume, inside the reservoir 3, which would be delimited by the first basket filtering medium if the reservoir inlet 13, the second aperture of the first basket filtering medium and the openings of the first sieve of the first basket filtering medium were sealed. The reservoir inlet 13 is thus arranged in the first portion 11. The second portion 12 of the reservoir 3 is the complementary volume, meaning that the sum of the first portion 11 and the second portion 12 is equal to the volume inside the reservoir 3. The reservoir outlet 14 is thus arranged in the second portion 12.

In this embodiment, the first sieve of the reservoir first filtering medium 8 comprises a first filtering layer and a second filtering layer, spaced apart from each other and arranged concentrically to one another. The first filtering layer has a lower mesh size than the second filtering layer. The first filtering layer is the inner filtering layer, meaning that debris, in order to pass from the first portion 11 to the second portion 12 through the first filtering medium 8, will have to pass first through the first filtering layer, and after through the second filtering layer.

Alternatively, the first sieve of the first basket filtering medium comprises a section configured to be opened and to be closed. In such a case, the debris trapped in the first basket filtering medium may be removed by removing the first basket filtering medium from the reservoir 3 by opening the section of the first basket filtering medium configured to be opened and to be closed. In such a case, the first portion 11 of the reservoir 3 is the minimum volume, inside the reservoir 3, which would be delimited by the first basket filtering medium if the reservoir inlet 13 and the openings of the first sieve of the first basket filtering medium were sealed. The reservoir inlet 13 is thus arranged in the first portion 11. The second portion 12 of the reservoir 3 is the complementary volume, meaning that the sum of the first portion 11 and the second portion 12 is equal to the volume inside the reservoir 3. The reservoir outlet 14 is thus arranged in the second portion 12.

## Claims

1. A filter (1) for storm water (2), comprising:
a reservoir (3) configured to accumulate storm water (2), the reservoir (3) having a reservoir wall (4) and a first side (5), wherein the storm water (2) accumulated in the reservoir (3) has a storm water surface (6) at a storm water level (7), wherein the storm water level (7) is measured from the first side (5) of the reservoir (3) to the storm water surface (6) along a reference line (R) perpendicular to the storm water surface (6), and wherein the storm water level (7) rises as the storm water (2) is accumulated in the reservoir (3);
a reservoir first filtering medium (8), arranged inside the reservoir (3) and separating the reservoir (3) into a first portion (11) configured to accumulate storm water (2) and a second portion (12) configured to accumulate storm water, wherein the first portion (11) is in fluid connection with the second portion (12) via the reservoir first filtering medium (8);
a reservoir inlet (13), arranged in the first portion (11) of the reservoir (3) and configured to let the storm water (2) in the reservoir (3);
a reservoir outlet (14), arranged in the second portion (12) of the reservoir (3) and configured to let the storm water (2) out of the reservoir (3);
a pipe (15), comprising:
a first pipe inlet (16), arranged in the second portion (12) of the reservoir (3) at a first level (17) perpendicular to the storm water surface (6), wherein the first level (17) is measured from the first side (5) of the reservoir (3) to the first pipe inlet (16) along said reference line (R);
a second pipe inlet (18), arranged in the second portion (12) of the reservoir (3) at a second level (19) perpendicular to the storm water surface (6), wherein the second level (19) is measured from the first side (5) of the reservoir (3) to the second pipe inlet (18) along said reference line (R), wherein the second level (19) is higher than the first level (17);
a pipe outlet (14), wherein the pipe outlet (14) is the reservoir outlet (14);
wherein the pipe (15) is configured to transfer the storm water (2) accumulated in the reservoir (3) from the first pipe inlet (16) to the reservoir outlet (14) when the storm water level (7) rises above a third level (20) perpendicular to the storm water surface (6), the third level (20) being measured from the first side (5) of the reservoir (3) along said reference line (R), wherein the third level (20) is higher than the first level (17) and lower than the second level (19);
wherein the reservoir first filtering medium (8) is configured to filter the storm water surface (6); and
wherein the first pipe inlet (16) is configured to be completely submerged below the storm water surface (6) at least when the storm water level (7) rises above the third level (20).

2. The filter (1) according to claim 1, wherein the reservoir first filtering medium (8) is arranged perpendicularly to the first side (5) of the reservoir (3).

3. The filter (1) according to any one of the preceding claims, wherein the reservoir (3) further comprises a reservoir overflow outlet (21) arranged in the second portion (12) of the reservoir (3) at a fourth level (22) perpendicular to the storm water surface (6), the fourth level (22) being measured from the first side (5) of the reservoir (3) to the reservoir overflow outlet (21) along said reference line (R), wherein the fourth level (22) is higher than the third level (20) and lower than the second level (19).

4. The filter (1) according to any one of the preceding claims, further comprising a first operating mechanism (24) enabling insertion and removal of the reservoir first filtering medium (8) from the reservoir (3).

5. The filter (1) according to any one of the preceding claims, wherein the reservoir first filtering medium (8) is a first basket filtering medium configured to directly receive the storm water (2) from the reservoir inlet (13).

6. The filter (1) according to any one of claims 1-4, wherein the filter (1) further comprises a reservoir second filtering medium (25) arranged in the first portion (11).

7. The filter (1) according to claim 6, wherein the reservoir second filtering medium (25) is a second basket filtering medium (25) configured to directly receive the storm water (2) from the reservoir inlet (13).

8. The filter (1) according to any one of claims 6-7, further comprising a second operating mechanism (26) enabling insertion and removal of the reservoir second filtering medium (25) from the reservoir (3).

9. The filter (1) according to any one of claims 6-8, wherein the reservoir first filtering medium (8) has a first mesh size, and the reservoir second filtering medium (25) has a second mesh size.

10. The filter (1) according to any one of the preceding claims, wherein the pipe (15) comprises a T-junction.
